Europäisches Patentamt

(19) **European Patent Office**

**Office européen des brevets**

(11) Veröffentlichungsnummer: **0 195 056**
**B1**

(12) # EUROPÄISCHE PATENTSCHRIFT

(45) Veröffentlichungstag der Patentschrifft:
**17.01.90**

(51) Int. Cl. 4: **G 02 B 26/10, G 01 C 11/02**

(21) Anmeldenummer: **85904795.3**

(22) Anmeldetag: **14.09.85**

(86) Internationale Anmeldenummer:
**PCT/DE 85/00321**

(87) Internationale Veröffentlichungsnummer:
**WO 86/01909 (27.03.86 Gazette 86/07)**

(54) OPTISCHES SYSTEM ZUR BEWEGUNGSKOMPENSATION VON ZEILEN-SCANNERN.

(30) Priorität: **21.09.84 DE 3434794**

(43) Veröffentlichungstag der Anmeldung:
**24.09.86 Patentblatt 86/39**

(45) Bekanntmachung des Hinweises auf die Patenterteilung:
**17.01.90 Patentblatt 90/03**

(84) Bennante Vertragsstaaten:
**FR**

(56) Entgegenhaltungen:
**DE-A-2 409 197**
**DE-C-1 798 311**
**FR-A-2 427 017**
**US-A-3 992 101**
**US-A-4 002 830**
**US-A-4 234 241**

(73) Patentinhaber: **Messerschmitt-Bölkow-Blohm Gesellschaft mit beschränkter Haftung Robert-Koch-Strasse D-8012 Ottobrunn (DE)**

(72) Erfinder: **LAUCHT, Horst, Dr.**
**Hermann-Löns-Weg 16**
**D-8206 Bruckmühl (DE)**
Erfinder: **EUSKIRCHEN, Jürgen, Franz**
**Weberweg 6**
**D-8899 Waidhofen (DE)**

EP 0 195 056 B1

2

## Beschreibung

Die Erfindung betrifft eine Vorrichtung zur Abtastung eines überflogenen Geländes, mit einer Detektorzeile, einer das Gelände auf diese abbildenden Systemoptik sowie einem rotierenden Strahlumlenksystem im optischen Strahlengang.

Eine derartige Vorrichtung ist aus der DE-PS-1 798 311 bekannt. Dort handelt es sich um einen Infrarot-Linienscanner, der zwei in Flugrichtung orientierte Detektorzeilen enthält, welche jeweils aus einer Anzahl von in Zeilenrichtung aufeinanderfolgenden Einzeldetektoren bestehen. Das überflogene Gelände wird mit Hilfe einer Optik in die Ebene der Detektoren abgebildet. Im optischen Strahlengang ist ein Strahlumlenksystem vorhanden, und zwar ein rotierendes Abtastspiegelsystem, durch welches das Gelände quer zur Flugrichtung abgetastet wird. Durch diese Abtastung wird an jedem Einzeldetektor das Bild eines in etwa quer zur Flugrichtung orientierten Geländestreifens einer gewissen Breite vorbeigeführt. Die Einzeldetektoren in der Detektorzeile liegen dicht hintereinander, und es muß darauf geachtet werden, daß zum Zwecke der Erzielung einer kontinuierlichen Abtastung ohne Überschneidung und ohne Auslassung von Geländestreifen die Rotationsgeschwindigkeit des Abtastspiegelsystems dem momentanen Verhältnis der Fluggeschwindigkeit zur Flughöhe angepaßt wird. Hierzu ist eine zweite, gegenüber der ersten in Flugrichtung versetzte und ebenso viele Einzeldetektoren aufweisende Detektorzeile vorgesehen. Bei angepaßter Rotationsgeschwindigkeit des Abtastspiegelsystems muß derselbe Geländepunkt nacheinander auf den genau einander entsprechenden Einzeldetektoren der beiden Detektorzeilen abgebildet werden.

Bei der bekannten Vorrichtung dient das Strahlumlenksystem direkt der Erzeugung von Geländebildstreifen, welche quer zur Flugrichtung orientiert sind. Bei stillstehenden Abtastspiegeln wäre eine flächenhafte Bilderzeugung nicht möglich, vielmehr würde lediglich ein schmaler, in Flugrichtung orientierter Geländestreifen aufgenommen werden können. Bei rotierendem Abtastspiegelsystem werden die Bildpunkte der einzelnen, quer zur Flugrichtung orientierten und dicht aneinanderliegenden Geländestreifen kontinuierlich an den Einzeldetektoren der Detektorzeile vorbeigeführt. Da diese Einzeldetektoren jeweils eine gewisse Belichtungszeit benötigen, darf dies nicht zu schnell geschehen. Infolgedessen macht sich die Flugbewegung dahingehend bemerkbar, daß eine Bewegungsunschärfe auftritt.

Der Erfindung liegt daher die Aufgabe zugrunde, eine Vorrichtung der eingangs genannten Art zu schaffen, bei der das Auftreten einer Bewegungsunschärfe so weitgehend wie möglich vermieden wird.

Diese Aufgabe wird gemäß der Erfindung dadurch gelöst, daß die Detektorzeile quer zur Flugrichtung orientiert ist und als Strahlumlenksystem ein mehrflächiges Prisma mit quer zur Flugrichtung und parallel zur Detektorzeile orientierter Drehachse verwendet wird.

Das als Strahlumlenksystem verwendete mehrflächige Prisma hat hier eine gänzlich andere Aufgabe erhalten als bei der eingangs beschriebenen bekannten Vorrichtung. Das rotierende Prisma dient hier dazu, direkt die durch die Flugbewegung bzw. die Relativbewegung zwischen Kamera und Objekt hervorgerufene Bewegungsunschärfe zu kompensieren. Auch bei stillstehendem Strahlumlenksystem ist es hier, ganz im Gegensatz zu der bekannten Vorrichtung, noch möglich, das gesamte überflogene Gelände flächenhaft abzubilden. Jedoch tritt während der erforderlichen Belichtungszeit ein Auswandern der Bildpunkte auf. Dies wird durch gegenläufiges Rotieren des als Strahlumlenksystem verwendeten, mehrflächigen Prismas verhindert. Bei richtiger Wahl der Rotationsgeschwindigkeit des Prismas werden die Bildpunkte eines quer zur Flugrichtung orientierten Geländestreifens während der Belichtungszeit auf der Detektorzeile festgehalten.

Gemäß einer besonderen Ausführungsform der Erfindung ist vorgesehen, daß unterschiedlichen Prismenflächen jeweils separate Detektorzeilen zugeordnet sind. Bei Verwendung entsprechender Filter läßt sich somit das Objekt in mehreren Spektralkanälen abtasten.

Schließlich kann das Prisma entweder für Reflexion oder Durchstrahlung ausgebildet sein.

Im folgenden wird die Erfindung in einigen Ausführungsbeispielen anhand von Abbildungen näher erläutert. Es zeigen in schematischer Weise:

Fig. 1   das Grundprinzip der Erfindung,
Fig. 1a  die perspektivische Darstellung eines mehrflächigen Prismas mit zugeordneter Systemoptik und Detektorzeile,
Fig. 2   eine Vorrichtung gemäß der Erfindung mit zwei Detektorzeilen,
Fig. 3   eine Vorrichtung gemäß der Erfindung mit drei Detektorzeilen und einem für Durchstrahlung ausgebildeten mehrflächigen Prisma,
Fig. 4   eine Vorrichtung gemäß der Erfindung mit drei Paaren von Detektorzeilen und einem für Durchstrahlung ausgebildeten mehrflächigen Prisma.

Zur Bewegungskompensation bei geflogenen oder in Satelliten in einer Umlaufbahn befindlichen Zeilen-Scannern wird durch das Vorschalten geeigneter rotierender Mehrfachreflektoren und/oder Prismen, deren Symmetrieachse parallel zur Zeilenachse liegt, die Integrationszeit variabel einstellbar.

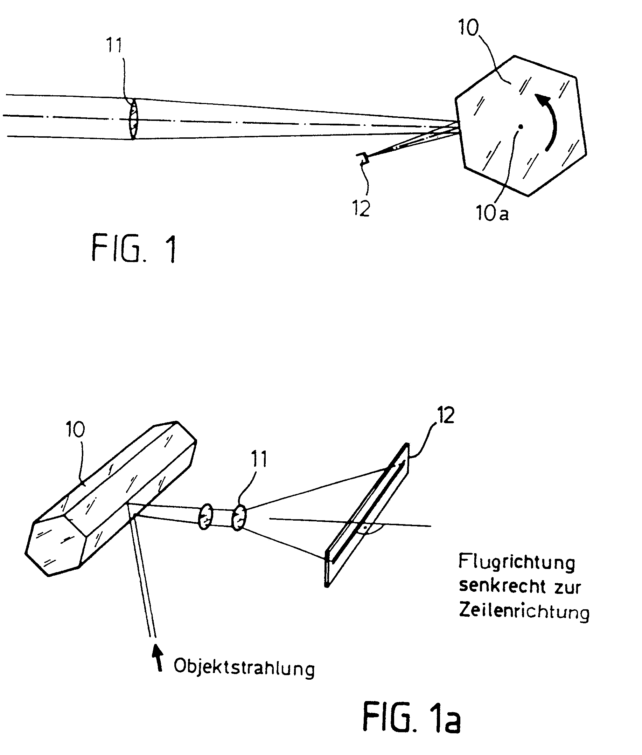

In der Fig. 1 ist dies am Beispiel eines Zeilenscanners schematisch aufgezeigt. Zur Bewegungskompensation ist hier ein mehrflächiges Prisma 10 der Systemoptik 11 zugeordnet. Dieses Prisma rotiert um seine Drehachse 10a, und zwar gegenläufig zur Flugrichtung, wobei die Drehzahl auf die geometrischen und radiometri-

2

schen Forderungen der jeweiligen Mission abgestimmt ist.

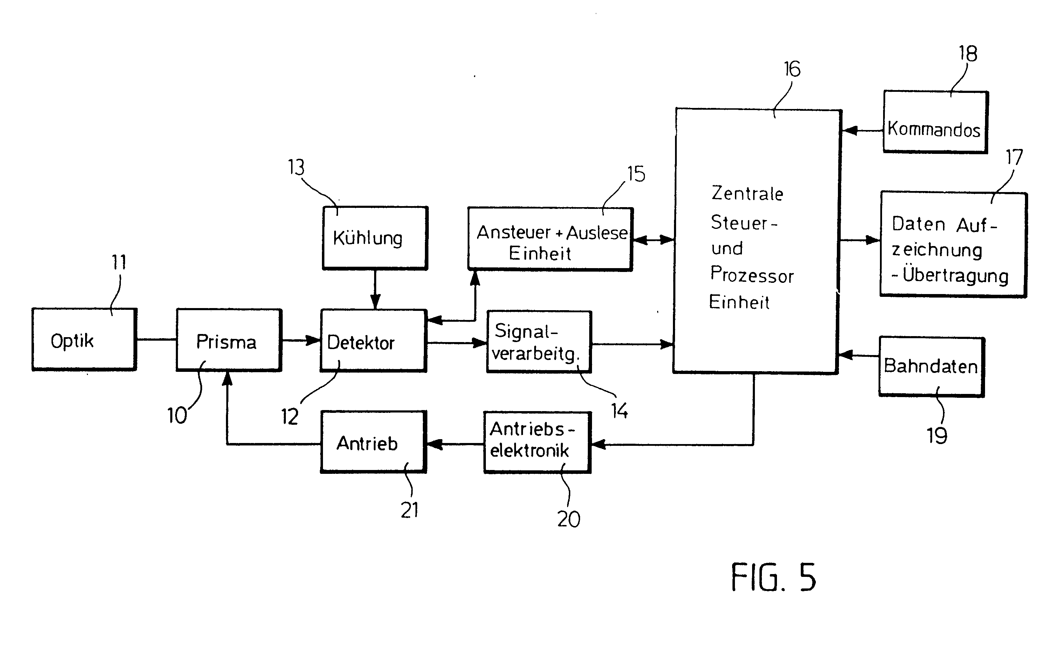

In der Fig. 5 ist hierfür ein Blockschaltbild gezeigt. Von einer zentralen Steuer- und Prozessoreinheit 16, die die Signale einer Kommandoeinheit 18 sowie die Bahndaten 19 speichert, wird über die Antriebselektronik 20 und den Antrieb 21 das Prisma 10 in die Aufgrund der jeweiligen Integrationszeit mindestens erforderliche Rotation versetzt. Die über die Optik 11 aufgenommenen Signale werden auf die Detektorzeile 12 gelenkt, die sie über eine Einheit zur Signalverarbeitung 14 der zentralen-Steuer- und Prozessoreinheit 16 eingibt, von wo sie sowohl einer Einheit für die Datenaufzeichnung und Übertragung 17, als auch einer Einheit zur Ansteuerung und Auslese 15 zugeführt werden, wobei letztere elektronische Einheit die Detektorzeile 12 mit der zentralen Steuer- und Prozessoreinheit 16 direkt verbindet. Mit 13 ist die für die Detektorzeile 12 vorgesehene Kühleinheit bezeichnet.

In der Figur 1a ist eine schematische Darstellung eines Ausführungsbeispiels mit frei wählbarer Drehgeschwindigkeit und -richtung des Reflektors (Prismas) gezeigt, wobei die Flugrichtung senkrecht zur Zeilenrichtung ist.

Die vorgeschlagenen Maßnahmen haben den weiteren Vorteil daß durch die nun realisierte Verlängerung der Integrationszeit bei gleicher Szene sowohl die Apertur kleiner gewählt werden kann als auch die Auslesefrequenz reduziert wird.

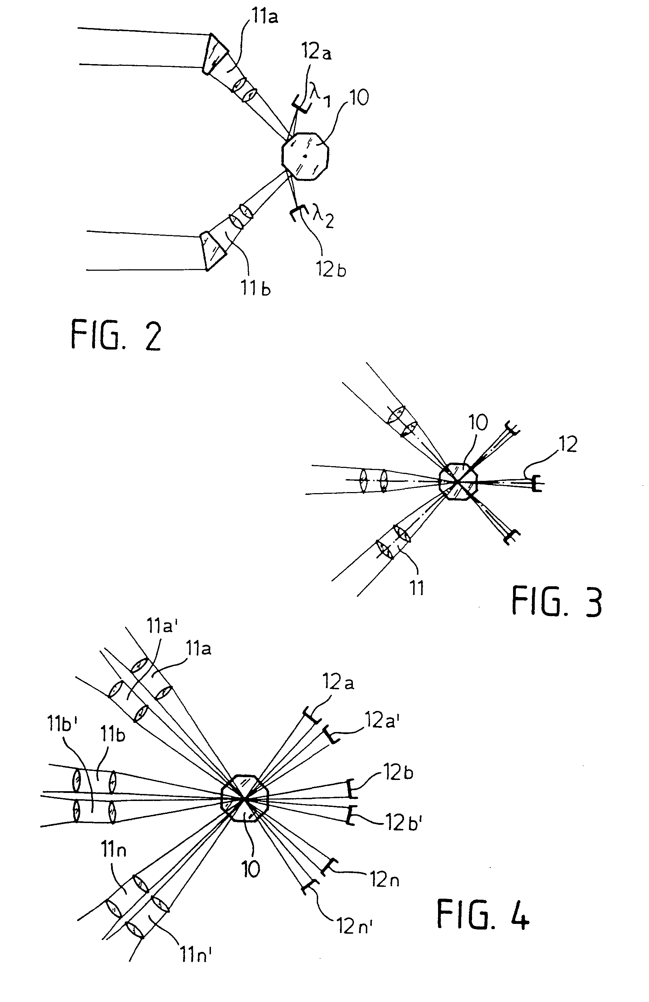

In den Fig. 2 bis 4 sind verschiedene Versionen, insbesondere sogenannte Stereo-Versionen, aufgezeigt. Das Prisma ist so herstellbar, das es in Durchstrahlung oder in Reflexion einsetzbar ist. Es kann für mehrere Spektralkanäle gleichzeitig benutzt werden und gewährleistet so deren Korrelierbarkeit.

Hierbei sind zwei Spektralkanäle ($\lambda_1$, $\lambda_2$) in Reflexion zwei Detektorzeilen 12 a, b zugeordnet, $\lambda_1$ und $\lambda_2$ stellen durch die Aufgabe bestimmte Mittenwellenlängen bei für die Aufgabe optimierter Bandbreite $\Delta\lambda$ dar.

Die Empfängerflächen der Detektozeilen 12a und 12b können so gewählt werden, daß gleiche Auflösung oder aber ein gezieltes bzw. gewünschtes Verhältnis erreicht wird. Durch die jeweils gewählte Anordnung wird die zeitliche und räumliche Korrelation sichergestellt.

Damit sind die Voraussetzungen für eine vergleichende Spektralanalyse und die Möglichkeit zur Datenreduktion in wesentlich vereinfachter Form geschaffen. Dies wird durch die Verwendung spektral gleicher oder unterschiedlicher Parallelsysteme bzw. gleicher oder unterschiedlicher Optiken 11a - 11n und Detektorgrößen 12a - 12n ermöglicht.

Durch die Verwendung gekoppelter Systeme der vorbeschriebenen Art wird eine kontinuierliche Aufzeichnung bei erhöhter Integrationszeit erhalten. Das beschriebene System ermöglicht außerdem eine wesentliche Reduktion der spektralen Bandbreite.

## Patentansprüche

1. Vorrichtung zur Abtastung eines überflogenen Geländes, mit einer Detektorzeile (12), einer das Gelände auf diese abbildenden Systemoptik (11) sowie einem rotierenden Strahlumlenksystem (10) im optischen Strahlengang, *dadurch gekennzeichnet,* daß die Detektorzeile (12) senkrecht zur Flugrichtung orientiert ist und als Strahlumlenksystem ein mehrflächiges Prisma (10) mit quer zur Flugrichtung und parallel zur Detektorzeile (12) orientierter Drehachse verwendet wird.

2. Vorrichtung nach Anspruch 1 dadurch gekennzeichnet, daß unterschiedlichen Prismenflächen jeweils separate Detektorzeilen (12a, 12b) zugeordnet sind.

3. Vorrichtung nach Anspruch 1 oder 2, dadurch gekennzeichnet, daß das Prisma (10) entweder für Reflexion oder für Durchstrahlung ausgebildet ist.

## Claims

1. A device for scanning an overflown terrain, with a detector row (12), an optical system (11) reproducing the terrain onto this as well as a rotating beam deflection system (10) in the optical beam path, characterised in that the detector row (12) is oriented perpendicularly to the flight direction and a multisurface prism (10) having the axis of rotation oriented transversely to the flight direction and parallel to the detector row (12) is used as beam deflection system.

2. A device according to claim 1, characterised in that in each case separate detector rows (12a, 12b) are associated with different prism surfaces.

3. A device according to claim 1 or 2, characterised in that the prism (10) is designed either for reflection or for transmission.

## Revendications

1. Dispositif de balayage d'un terrain survolé, comprenant une rangée de détecteurs (12), un système optique (11) reproduisant le terrain sur celle-ci ainsi qu'un système de déviation rotatif (11) des rayons placés dans le trajet optique des rayons, caractérisé par le fait que la rangée de détecteurs (12) est orientée perpendiculairement au sens du vol et que, comme système de déviation des rayons, on utilise un prisme (10) à plusieurs faces avec axe de rotation orienté transversalement au sens du vol et parallèlement à la rangée de détecteurs (12).

2. Dispositif selon la revendication 1, caractérisé par le fait que des rangées de détecteurs séparées (12a, 12b) sont respectivement associées à différentes faces du prisme.

3. Dispositif selon la revendication 1 ou 2, caractérisé par le fait que le prisme (10) est réalisé soit pour la réflexion, soit pour la transmission.

FIG. 1

Objektstrahlung

Flugrichtung
senkrecht zur
Zeilenrichtung

FIG. 1a

FIG. 2

FIG. 3

FIG. 4

FIG. 5